# EUROPÄISCHE PATENTANMELDUNG

(11) **EP 4 393 851 A1**
(43) Veröffentlichungstag der Anmeldung: **03.07.2024**
(21) Anmeldenummer: 23203804.2
(22) Anmeldetag: 16.10.2023
(51) Int. Cl.: B65G 47/38, B07C 5/14, B65G 35/00, B65G 25/06

(54) **HOLZLANGGUT-SORTIERVORRICHTUNG**

(30) Priorität: 02.01.2023 DE 102023100029
(71) Anmelder: Hans Hundegger Beteiligungs GmbH & Co. KG, 87459 Pfronten-Weißbach (DE)
(72) Erfinder: Hundegger, Hans, 87749 Hawangen (DE)
(74) Vertreter: Charrier Rapp & Liebau

(57) **Zusammenfassung**

Die Erfindung betrifft eine Holzlanggut-Sortiervorrichtung (1) für die automatisierte Verteilung und Übergabe der in einer Holzbearbeitungsanlage bearbeiteten längeren Holzbauteile, wie z.B. Balken, Bretter oder Stangen, an unterschiedliche Ablagen oder Aufnahmen (3). Um eine automatische Sortierung auch längerer Holzbauteile mit reduziertem Platzbedarf zu ermöglichen, weist die Holzlanggut-Sortiervorrichtung zwei oder mehrere nebeneinander angeordnete und zueinander parallele Aufnahme- und Übergabeeinrichtungen (5) auf, die eine zwischen einer horizontalen Aufnahmestellung und einer hochgeklappten Übergabestellung schwenkbare Bauteilauflage (6) enthalten.

## Beschreibung

Die Erfindung betrifft eine Holzlanggut-Sortiervorrichtung für die automatisierte Verteilung und Übergabe der aus einer Holzbearbeitungsanlage abtransportierten längeren Holzbauteile, wie z.B. Balken, Bretter oder Stangen, an unterschiedliche Ablagen oder Aufnahmen.

Bei der Holzbearbeitung ergibt sich oftmals die Problematik, dass mehrere an einer Bearbeitungsmaschine aufeinanderfolgend bearbeiteten längeren Holzbauteile nach der Bearbeitung unterschiedlichen Aufträgen zugeordnet werden müssen. Die aus der Bearbeitungsmaschine kommenden Balken, Bretter oder Stangen müssen nach der Bearbeitung dann zu unterschiedlichen Ablagen oder Aufnahmeeinrichtungen transportiert werden, um diese z.B. auf unterschiedliche Fertigungsaufträge oder Fertigungslose zu verteilen. Dies kann z.B. durch ein an der Bearbeitungsmaschine angeordnetes Transportband erfolgen, das zu beiden Seiten gekippt werden kann. Dadurch können die auf dem Transportband liegenden Werkstücke zu beiden Seiten abgeworfen und in dort befindlichen Ablagen oder Aufnahmen zum Weitertransport gesammelt werden. Falls die Werkstücke jedoch zu mehr als zwei Aufträgen zusammengestellt werden müssen, werden mehrere aufeinanderfolgende Transportbänder benötigt, was besonders bei langen Bauteilen einen oftmals nicht zur Verfügung stehenden großen Platzbedarf erfordert.

Aufgabe der Erfindung ist es, eine Holzlanggut-Sortiervorrichtung der eingangs genannten Art zu schaffen, die eine automatisierte Sortierung auch längerer Holzbauteile mit reduziertem Platzbedarf und verbesserter Aufteilung ermöglicht.

Diese Aufgabe wird durch eine Holzlanggut-Sortiervorrichtung mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Holzlanggut-Sortiervorrichtung enthält zwei oder mehrere nebeneinander angeordnete und zueinander parallele Aufnahme- und Übergabeeinrichtungen, die eine zwischen einer horizontalen Aufnahmestellung und einer hochgeklappten Übergabestellung schwenkbare Bauteilauflage enthalten. Durch die nebeneinander angeordneten Aufnahme- und Übergabeeinrichtungen mit den zwischen einer horizontalen Aufnahmestellung und einer hochgeklappten Übergabestellung schwenkbaren Bauteilauflagen können längere und auch kürzere Holzbauteile quer zu deren Längsachse weitergegeben und auf besonders platzsparende Weise automatisiert auf unterschiedliche Ablagen oder Aufnahmen verteilt werden. Dadurch kann eine platzsparende Sortierung und Verteilung der Holzbauteile in Querrichtung erfolgen. In der horizontalen Aufnahmestellung kann durch die Bauteilauflage eine unterhalb angeordnete Aufnahme abgedeckt und ein Holzbauteil in Längsrichtung zur Weitergabe aufgenommen werden. In der hochgelappten Übergabestellung kann durch die Bauteilauflage eine unterhalb angeordnete Aufnahme zur Einsortierung des Holzbauteils freigegeben oder ein auf der Bauteilauflage liegendes Holzbauteil an eine daneben angeordnete Aufnahme- und Übergabeeinrichtungen zur Einsortierung in weitere Aufnahmen weitergegen werden. Durch die Bewegung der Bauteilauflagen in die gekippte Übergabestellung kann ein auf der Bauteilauflage einer ersten Aufnahme- und Übergabeeinrichtungen liegendes Holzbauteil entweder an die in einer horizontalen Aufnahmestellung befindliche Bauteilauflage der daneben angeordneten weiteren Aufnahme- und Übergabeeinrichtung übergeben oder in eine daneben angeordnete Aufnahme abgeworfen werden, sofern sich die Bauteilauflage der daneben angeordneten Aufnahme- und Übergabeeinrichtung in der hochgeklappten Übergabestellung befindet. Die Holzlanggut-Sortiervorrichtung ist einfach aufgebaut und durch weitere identisch ausgebildete Aufnahme- und Übergabeeinrichtungen beliebig erweiterbar.

In einer möglichen Ausführung können die zueinander parallelen Aufnahme- und Übergabeeinrichtungen an einer oder beiden Längsseiten einer zur Übergabe der Holzbauteile an eine erste Aufnahme- und Übergabeeinrichtung ausgebildeten Transporteinrichtung angeordnet sein. Durch die Transportvorrichtung können die Holzbauteile z.B. quer zu deren Längsachse entweder in eine erste Aufnahme oder zum Weitertransport auf die Bauteilauflage einer ersten Aufnahme- und Übergabeeinrichtung transportiert werden. Die Transporteinrichtung kann z.B. als Transportband mit einem in Längsrichtung antreibbaren und zur Seite kippbaren Förderband ausgebildet sein. Durch Antrieb des Förderbands in Längsrichtung kann ein von einer Bearbeitungsstation kommendes Holzbauteil zunächst in Längsrichtung an eine bestimmte Position transportiert und anschließend in Querrichtung je nach Stellung der Bauteilauflage entweder in eine neben der Transporteinrichtung angeordnete erste Aufnahme oder auf die Bauteilauflage einer ersten Aufnahme- und Übergabeeinrichtung zur Übergabe an eine weitere Aufnahme transportiert werden. Die Holzbauteile können aber auch durch Querschieber, Greifer oder andere geeignete Transporteinrichtungen auf eine Bauteilauflage einer ersten Aufnahme- und Übergabeeinrichtung gelangen.

Die Holzbauteile können aber auch durch Querschieber, Greifer oder andere geeignete Transporteinrichtungen auf eine Bauteilauflage einer ersten Aufnahme- und Übergabeeinrichtung gelangen. Die Transporteinrichtung kann z.B. auch als Rollenbahn mit gesonderten Transportelementen für die Längsbewegung des Holzbauteils und Querschiebern für das Abschieben des Holzbauteils von der Rollenbahn in Querrichtung ausgeführt sein. Auch von Hand oder durch Roboter oder andere automatische Handhabungseinrichtungen können die Holzbauteile von einer Bearbeitungsmaschine zu der Bauteilauflage einer ersten Aufnahme- und Übergabeeinrichtung zur weiteren Sortierung transportiert werden.

Um auch unterschiedlich lange Werkstücke problemlos aufnehmen zu können, kann die Bauteilauflage in vorteilhafter Weise als durchgängige Auflageplatte mit einer rechteckigen oberen Auflagefläche ausgebildet sein. Die Bauteilaufnahme kann aber auch durch mehrere voneinander beabstandete Träger gebildet werden. Die Abstände zwischen den Trägern können dabei so gewählt werden, dass unterschiedlich lange Holzbauteile aufgenommen und übergeben werden können.

In einer konstruktiv und fertigungstechnisch einfachen Ausführung kann die Bauteilauflage an einem zu einer Längsachse der Transporteinrichtung parallelen horizontalen Längsträger um eine horizontale Drehachse schwenkbar angeordnet sein. Der horizontale Längsträger kann auf voneinander beanstandeten Vertikalstützen abgestützt sein.

Um eine möglich schonende und störungsfrei Übergabe der Holzbauteile auf die Bauteilauflagen der Aufnahme- und Übergabeeinrichtungen zu ermöglichen, weisen die Bauteilauflagen an ihrer frei auskragenden ersten Längsseite eine nach oben gebogene Rundung und an ihrer gegenüberliegenden zweiten Längsseite eine nach oben gebogene Rampe auf. Durch die Rampe kann in der horizontalen Aufnahmestellung der Bauteilauflage verhindert werden, dass ein bei der Übergabe auf die Bauteilaufnahme gleitendes Holzbauteil über die Bauteilauflage hinaus seitlich abgleitet. In der hochgeklappten Übergabestellung der Bauteilauflage wird durch die Rampe ein abgerundeter Übergang zu einer daneben angeordneten Bauteilauflage ermöglicht.

Die auf der rechten und linken Längsseite der horizontalen Längsträger beidseitig der Aufnahme- und Übergabeeinrichtungen angeordneten Aufnahmen können in einer zweckmäßigen Ausführung als Rungenwagen mit einem als Flachwagen ausgebildeten Transportwagen und an den Seiten des Transportwagens nach oben zeigend eingesteckten Haltepfosten bzw. Rungen zur Sicherung der Ladung gegen Herunterrutschen ausgeführt sein. Zwischen den Rungen können Seile oder Planen angeordnet sein, um die in die Aufnahmen abgeworfenen Holzbauteile vor Beschädigungen zu schützen. Selbstverständlich können auch andere Aufnahme oder Ablagen für einen automatisierten Abtransport der sortierten Holzbauteile vorgesehen sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine schematische Darstellung einer Holzlanggut-Sortiervorrichtung mit einer Transporteinrichtung und mehreren Aufnahme- und Übergabeeinrichtungen in einer Perspektivansicht;
- **Figur 2**: die Holzlanggut-Sortiervorrichtung von Figur 1 in einer schematischen Draufsicht;
- **Figur 3**: die in Figur 1 gezeigte Holzlanggut-Sortiervorrichtung mit den in einer ersten Stellung befindlichen Aufnahme- und Übergabeeinrichtungen in einer Schnittansicht entlang der Linie A-A von Figur 2 und
- **Figur 4**: die in Figur 1 gezeigte Holzlanggut-Sortiervorrichtung mit den in einer zweiten Stellung befindlichen Aufnahme- und Übergabeeinrichtungen in einer Schnittansicht entlang der Linie A-A von Figur 2.

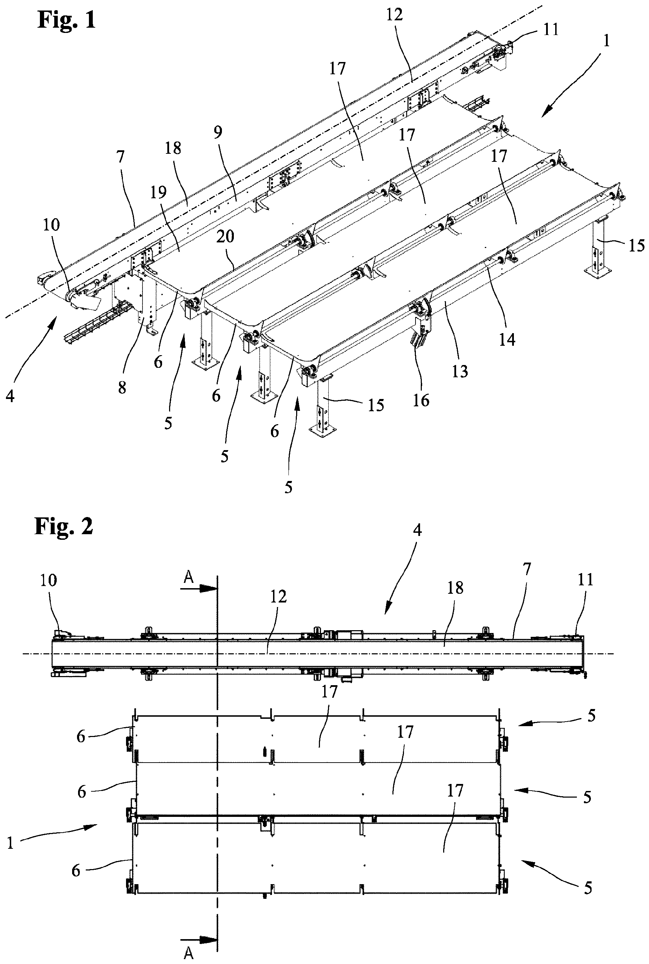

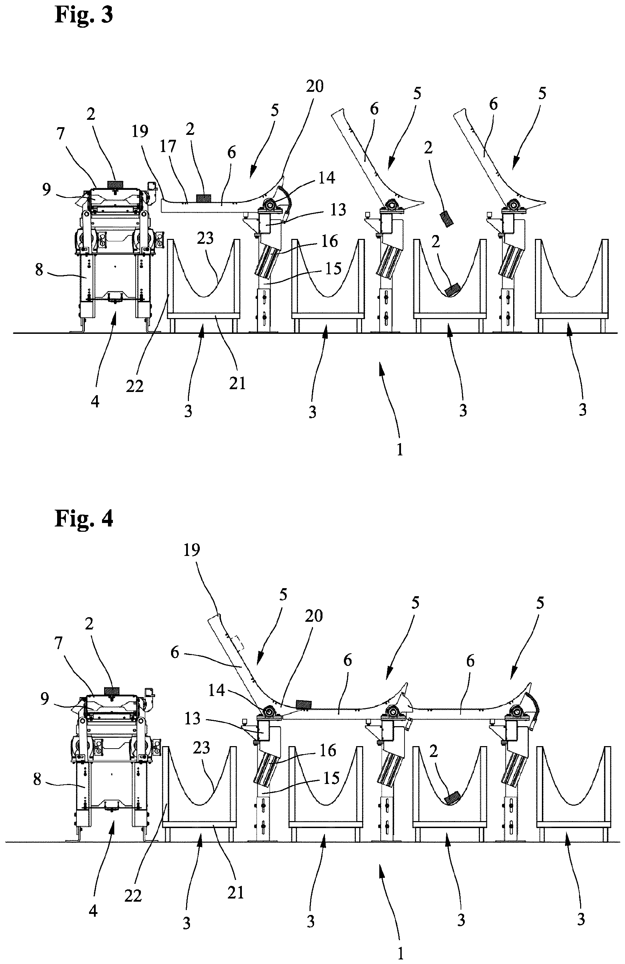

Die in den Figuren 1 bis 4 in verschiedenen Ansichten dargestellte Holzlanggut-Sortiervorrichtung 1 ist für die automatisierte Verteilung und Übergabe der aus einer Bearbeitungsanlage abtransportierten längeren Holzbauteile 2, wie z.B. Holzbalken, Bretter oder Stangen, an mehrere nebeneinander angeordnete Aufnahmen 3 konzipiert. Mit Hilfe der gezeigten Holzlanggut-Sortiervorrichtung 1 können die in einer Holzbearbeitungsanlage bearbeiteten Holzbalken, Bretter, Stangen oder ähnlichen langen Holzbauteile 2 quer zu ihrer Längsachse auf besonders platzsparende Weise automatisiert auf mehrere in den Figuren 3 und 4 gezeigte Aufnahmen 3 verteilt und zu gewünschten Produktionseinheiten zusammengefasst werden. In den Figuren 3 und 4 ist die Holzlanggut-Sortiervorrichtung 1 mit mehreren hier als Transportwagen ausgebildeten Aufnahmen 3 in unterschiedlichen Übergabestellungen als Schnittansicht gezeigt.

Die Holzlanggut-Sortiervorrichtung 1 enthält in der dargestellten Ausführung mehrere neben einer Transporteinrichtung 4 zu dieser und zueinander parallel angeordnete Aufnahme- und Übergabeeinrichtungen 5, die eine zwischen einer horizontalen Aufnahmestellung und einer hochgeklappten Übergabestellung schwenkbare plattenförmige Bauteilauflage 6 aufweisen. Die für einen Längs- und Quertransport eines Holzbauteils 2 konzipierte Transporteinrichtung 4 ist hier als Transportband mit einem in Längsrichtung antreibbaren und zur Seite kippbaren Förderband 7 ausgeführt. Mit Hilfe des zwischen einer horizontalen Förderstellung und einer zur Seite gekippten Übergabestellung kippbaren Förderbands 7 der Transporteinrichtung 4 kann ein von einer Bearbeitungsstation kommendes Holzbauteil 2 in Längsrichtung bewegt und durch Kippen des Förderbands 7 anschließend in Querrichtung je nach Stellung der Bauteilauflage 6 entweder in eine neben der Transporteinrichtung 4 angeordnete erste Aufnahme 3 oder auf die Bauteilauflage 6 einer neben der Transporteinrichtung 4 angeordneten ersten Aufnahme- und Übergabeeinrichtung 5 transportiert werden. Die Transportvorrichtung 4 mit dem über einen Antrieb in Längsrichtung antreibbaren Förderband 7 weist eine der Länge der plattenförmigen Bauteilauflage 6 entsprechende Länge auf, so dass auch die längsten Holzbauteile 2 von der Transportvorrichtung 4 mittig auf die plattenförmige Bauteilauflage 6 der ersten Aufnahme- und Übergabeeinrichtung 5 übergeben werden können.

Wie aus den Figuren 3 und 4 hervorgeht, sind bei der dort gezeigten Ausführung neben der ersten Aufnahme- und Übergabeeinrichtung 5 zwei weitere zu dieser und zueinander parallele Aufnahme- und Übergabeeinrichtungen 5 angeordnet. Durch diese können die von der Transporteinrichtung 4 quer abtransportierten Holzbauteile 2 auf weitere Aufnahmen 3 verteilt werden. Durch drei nebeneinander angeordnete Aufnahme- und Übergabeeinrichtungen 5 können die von der Transporteinrichtung 4 seitlich abgeworfenen Holzbauteile 2 so auf vier unterschiedliche Aufnahmen 3 verteilt werden. Die Holzlanggut-Sortiervorrichtung 1 ist durch weitere Aufnahme- und Übergabeeinrichtungen 5 beliebig erweiterbar. Sofern die als Transportband ausgebildete Transporteinrichtung 4 ein zu beiden Seiten kippbares Förderband 7 enthält, können auch auf beiden Längsseiten der Transporteinrichtung 4 entsprechende Aufnahme- und Übergabeeinrichtungen 5 angeordnet werden.

Die in der Regel an einer Bearbeitungseinheit einer Holzbearbeitungsanlage angeordnete und zum Abtransport der bearbeiteten Holzbauteile 2 in Richtung deren Längsachse ausgebildete Transporteinrichtung 4 enthält in der gezeigten Ausführung einen aus Vertikal- und Horizontalprofilen gebildeten Unterbau 8, auf dem eine Tragkonstruktion 9 für die Führung und den Antrieb des über vordere und hintere Umlenkungen 10 und 11 geführten Förderbands 7 angeordnet ist. Die Tragkonstruktion 9 ist auf dem Unterbau 8 zu beiden Seiten kippbar angeordnet, so dass ein auf dem Förderband 7 liegendes Holzbauteil 2 durch Kippen zu beiden Seiten abgeworfen werden kann. Selbstverständlich kann die Tragkonstruktion 9 auch fest auf dem Unterbau angeordnet 8 sein und die Holzbauteile 2 können durch gesonderte Abschiebeelemente oder dgl. seitlich von dem Förderband 4 abtransportiert werden. Die Transporteinrichtung 4 muss auch nicht zwangsläufig als Transportband ausgeführt sein. Sie kann z.B. auch als Rollenbahn mit gesonderten Transportelementen für die Linearbewegung der auf der Rollenbahn aufliegenden Holzbauteile ausgeführt sein.

Wie aus Figur 1 ersichtlich ist, sind die Bauteilauflagen 6 der neben der Transporteinrichtung 4 längsseitig angeordneten Aufnahme- und Übergabeeinrichtungen 5 an parallel zu einer Längsachse 12 der Transporteinrichtung 4 verlaufenden horizontalen Längsträgern 13 um eine horizontale Drehachse 14 schwenkbar angeordnet. Die von der Transporteinrichtung 4 beabstandeten und zu dieser parallelen Längsträger 13 werden an ihren Enden durch zwei voneinander beabstandete Vertikalstützen 15 abgestützt. Über jeweils einen hier als Pneumatikzylinder ausgebildeten Antrieb 16 können die sich über einen Großteil der Gesamtlänge der Transporteinrichtung 4 erstreckenden Bauteilauflagen 6 zwischen der horizontalen Aufnahmestellung und der hochgeklappten Übergabestellung geschwenkt werden.

In dem gezeigten Ausführungsbeispiel sind die Bauteilauflagen 6 als durchgängige Auflageplatten mit einer rechteckigen oberen Auflagefläche 17 ausgebildet. In der horizontalen Aufnahmestellung kragen die Bauteilauflagen 6 von dem Längsträger 13 in Richtung der Transporteinrichtung 4 seitlich aus und die obere Auflagefläche 17 ist etwas unterhalb einer oberen Auflagefläche 18 des Förderbands 4 angeordnet.

Wie aus den Figuren 3 und 4 hervorgeht, ist die neben der Transporteinrichtung 4 angeordnete erste Aufnahme- und Übergabeeinrichtung 5 so positioniert, dass ein durch Kippen des Förderbands 7 von deren Auflagefläche 18 heruntergleitendes Holzbauteil 2 auf die Bauteilauflage 6 der ersten Aufnahme- und Übergabeeinrichtung 5 gelangt, sofern sich die Bauteilauflage 6 der ersten Aufnahme- und Übergabeeinrichtung 5 gemäß Figur 3 in der horizontalen Aufnahmestellung befindet. Wenn sich die Bauteilauflage 6 der ersten Aufnahme- und Übergabeeinrichtung 5 dagegen gemäß Figur 4 in der hochgeklappten Stellung befindet, kann ein durch Kippen des Förderbands 7 von deren Auflagefläche 18 heruntergleitendes Holzbauteil 2 in die neben der Transporteinrichtung 4 angeordnete erste Aufnahme 3 fallen.

Wenn sich die Bauteilauflage 6 der neben der ersten Aufnahme- und Übergabeeinrichtung 5 angeordneten zweiten Aufnahme- und Übergabeeinrichtung 5 gemäß Figur 3 in der hochgeklappten Übergabestellung befindet, kann ein auf der Bauteilauflage 6 der ersten Aufnahme- und Übergabeeinrichtung 5 angeordnetes Holzbauteil 2 durch Hochklappen der Bauteilauflage 6 in die seitlich neben der ersten Aufnahme 3 angeordnete zweite Aufnahme 3 befördert werden. Befindet sich dagegen die Bauteilauflage 6 der neben der ersten Aufnahme- und Übergabeeinrichtungen 5 angeordneten zweiten Aufnahme- und Übergabeeinrichtung 5 gemäß Figur 4 in der horizontalen Übergabestellung, kann ein auf der Bauteilauflage 6 der ersten Aufnahme- und Übergabeeinrichtung 5 angeordnetes Holzbauteil 2 durch Hochklappen der Bauteilauflage 6 der ersten Aufnahme- und Übergabeeinrichtung 5 auf die Bauteilauflage 6 der zweiten Aufnahme- und Übergabeeinrichtung 5 gleiten. Durch die neben der zweiten Aufnahme- und Übergabeeinrichtung 5 angeordnete dritte Aufnahme- und Übergabeeinrichtung 5 oder weitere Aufnahme- und Übergabeeinrichtungen kann dann eine entsprechende Verteilung auf weitere Aufnahmen 3 erfolgen.

Um eine möglichst schonende und störungsfrei Übergabe der Holzbauteile 2 auf die Bauteilauflagen 6 der Aufnahme- und Übergabeeinrichtungen 5 zu ermöglichen, weisen die Bauteilauflagen 6 an ihrer frei auskragenden ersten Längsseite eine nach oben gebogene Rundung 19 und an ihrer gegenüberliegenden zweiten Längsseite eine nach oben gebogene Rampe 20 auf. Durch die Rampe 20 kann in der horizontalen Aufnahmestellung der Bauteilauflage 6 verhindert werden, dass ein auf die Bauteilauflage 6 gleitendes Holzbauteil 2 über die Bauteilauflage 6 hinaus seitlich abgleitet. In der hochgeklappten Übergabestellung der Bauteilauflage 6 wird durch die Rampe 20 ein abgerundeter Übergang zu einer daneben angeordneten Bauteilauflage 6 ermöglicht. In der hochgeklappten Stellung der Bauteilauflage 6 deckt die Rampe 20 die frei auskragende Längsseite einer daneben angeordneten, in der horizontalen Aufnahmestellung befindlichen Bauteilaufnahme 6 ab und bildet eine abgerundete Übergangsfläche.

Die auf beiden Seiten der Aufnahme- und Übergabeeinrichtungen 5 angeordneten Aufnahmen 3 sind bei der gezeigten Ausführung als Rungenwagen mit einem als Flachwagen ausgebildeten Transportwagen 21 und an den Seiten des Transportwagens 21 nach oben zeigend eingesteckten Haltepfosten bzw. Rungen 22 zur Sicherung der Ladung gegen Herunterrutschen ausgeführt. Zwischen den Rungen 22 sind Seile oder Planen 23 angeordnet, um die in die Aufnahmen 3 abgeworfenen Holzbauteile 2 vor Beschädigungen zu schützen.

### Bezugszeichenliste

- 1: Holzlanggut-Sortiervorrichtung
- 2: Holzbauteil
- 3: Aufnahme
- 4: Transporteinrichtung
- 5: Aufnahme- und Übergabeeinrichtung
- 6: Bauteilauflage
- 7: Förderband
- 8: Unterbau
- 9: Tragkonstruktion
- 10: Vordere Umlenkung
- 11: Hintere Umlenkung
- 12: Längsachse der Transporteinrichtung
- 13: Horizontaler Längsträger
- 14: Horizontale Drehachse
- 15: Vertikalstütze
- 16: Antrieb
- 17: Obere Auflagefläche der Bauteilauflage
- 18: Obere Auflagefläche der Förderbands
- 19: Rundung
- 20: Rampe
- 21: Transportwagen
- 22: Runge
- 23: Seil oder Plane

## Patentansprüche

1. Holzlanggut-Sortiervorrichtung (1) für die automatisierte Verteilung und Übergabe der in einer Holzbearbeitungsanlage bearbeiteten längeren Holzbauteile, wie z.B. Balken, Bretter oder Stangen, an unterschiedliche Ablagen oder Aufnahmen (3), **gekennzeichnet durch** zwei oder mehrere nebeneinander angeordnete und zueinander parallele Aufnahme- und Übergabeeinrichtungen (5), die eine zwischen einer horizontalen Aufnahmestellung und einer hochgeklappten Übergabestellung schwenkbare Bauteilauflage (6) enthalten.

2. Holzlanggut-Sortiervorrichtung (1) nach Anspruch 1, **dadurch gekennzeichnet, dass** die zueinander parallelen Aufnahme- und Übergabeeinrichtungen (5) an einer oder beiden Längsseiten einer zur Übergabe eines Holzbauteils (2) an eine erste Aufnahme- und Übergabeeinrichtung (5) ausgebildeten Transporteinrichtung (4) angeordnet sind.

3. Holzlanggut-Sortiervorrichtung (1) nach Anspruch 1 oder 2, **dadurch gekennzeichnet, dass** die Transporteinrichtung (4) als Transportband mit einem in Längsrichtung antreibbaren und zur Seite kippbaren Förderband (7) ausgebildet ist.

4. Holzlanggut-Sortiervorrichtung (1) nach einem der Ansprüche 1 bis 3, **dadurch gekennzeichnet, dass** die Bauteilauflagen (6) als durchgängige Auflageplatte mit einer rechteckigen oberen Auflagefläche (17) ausgebildet sind.

5. Holzlanggut-Sortiervorrichtung (1) nach einem der Ansprüche 1 bis 4, **dadurch gekennzeichnet, dass** die Bauteilauflagen (6) jeweils an einem horizontalen Längsträger (13) um eine horizontale Drehachse (14) schwenkbar angeordnet sind.

6. Holzlanggut-Sortiervorrichtung (1) nach Anspruch 5, **dadurch gekennzeichnet, dass** der horizontale Längsträger (13) auf voneinander beanstandeten Vertikalstützen (15) abgestützt ist.

7. Holzlanggut-Sortiervorrichtung (1) nach einem der Ansprüche 1 bis 6, **dadurch gekennzeichnet, dass** die Bauteilauflagen (6) an ihrer frei auskragenden ersten Längsseite eine nach oben gebogene Rundung (19) aufweisen.

8. Holzlanggut-Sortiervorrichtung (1) nach Anspruch 7, **dadurch gekennzeichnet, dass** die Bauteilauflagen (6) an ihrer der frei auskragenden ersten Längsseite gegenüberliegenden zweiten Längsseite eine nach oben gebogene Rampe (20) enthalten.

9. Holzlanggut-Sortiervorrichtung (1) nach Anspruch 8, **dadurch gekennzeichnet, dass** die Rampe (20) in der hochgeklappten Stellung der Bauteilaufnahme (6) die frei auskragende Längsseite einer daneben angeordneten, in der horizontalen Aufnahmestellung befindliche Bauteilauflage (7) überdeckt.

10. Holzlanggut-Sortiervorrichtung (1) nach einem der Ansprüche 5 bis 9, **dadurch gekennzeichnet, dass** die Aufnahmen (3) auf der rechten und linken Längsseite der horizontalen Längsträger (13) angeordnet sind.

11. Holzlanggut-Sortiervorrichtung (1) nach einem der Ansprüche 1 bis 10, **dadurch gekennzeichnet, dass** die Aufnahmen (3) als Rungenwagen mit einem als Flachwagen ausgebildeten Transportwagen (21) und an den Seiten des Transportwagens (21) nach oben zeigend eingesteckten Haltepfosten bzw. Rungen (22) ausgebildet sind.

12. Holzlanggut-Sortiervorrichtung (1) nach Anspruch 11, **dadurch gekennzeichnet, dass** zwischen den Rungen (22) Seile oder Planen (23) angeordnet sind.
